(19) Europäisches Patentamt
European Patent Office
Office européen des brevets

(11) Veröffentlichungsnummer: **0 428 973 B1**

(12) # EUROPÄISCHE PATENTSCHRIFT

(45) Veröffentlichungstag der Patentschrift: **20.12.95**

(51) Int. Cl.[6]: **C08K 5/37**, C08K 5/5393, C08L 21/00

(21) Anmeldenummer: **90121610.1**

(22) Anmeldetag: **12.11.90**

Die Akte enthält technische Angaben, die nach dem Eingang der Anmeldung eingereicht wurden und die nicht in dieser Patentschrift enthalten sind.

(54) **Stabilisatorgemische für Elastomere**

(30) Priorität: **14.11.89 CH 4089/89**

(43) Veröffentlichungstag der Anmeldung:
**29.05.91 Patentblatt 91/22**

(45) Bekanntmachung des Hinweises auf die Patenterteilung:
**20.12.95 Patentblatt 95/51**

(84) Benannte Vertragsstaaten:
**BE DE ES FR GB IT NL**

(56) Entgegenhaltungen:
**EP-A- 0 224 442**

(73) Patentinhaber: **CIBA-GEIGY AG**
**Klybeckstrasse 141**
**CH-4002 Basel (CH)**

(72) Erfinder: **Dubs, Paul, Dr.**
**Route du Confin 14**
**CH-1723 Marly (CH)**
Erfinder: **Knobloch, Gerrit, Dr.**
**Im Stigler 25**
**CH-4312 Magden (CH)**
Erfinder: **Meier, Hans-Rudolf, Dr.**
**Route du Confin 54**
**CH-1723 Marly (CH)**

(74) Vertreter: **Zumstein, Fritz, Dr. et al**
**Patentanwälte,**
**Dr. F. Zumstein,**
**Dipl.-Ing. F. Klingseisen,**
**Bräuhausstrasse 4**
**D-80331 München (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.09/3.3.3)

## Beschreibung

Die vorliegende Erfindung betrifft Zusammensetzungen enthaltend ein Elastomer und ein Stabilisatorgemisch, das aus einem Bis-(alkylthiomethyl)-phenol und mindestens einer P- oder S-haltigen Verbindung besteht.

Alkylthiomethyl-haltige Phenole in Gemischen mit P- und/oder S-haltigen Verbindungen sind bekannt als Stabilisatoren für Elastomere. So ist beispielsweise in der EP-A-049 133 ein 4-Komponenten-Gemisch beschrieben. Es besteht aus einem Diphenylamin, einem Triphenylphosphit, einem Dialkylthiodipropionat und mindestens einem Alkylphenol oder Bisphenol, wie zum Beispiel Bis-(4-hydroxybenzyl)thioether.

Aus der US-A-3 658 743 ist ein 3-Komponenten Gemisch für Elastomere bekannt. Es besteht aus einem Phenol oder Bisphenol, wie zuvor in der EP-A-049 133 genannt, einem organischen Sulfid oder Dialkylthiodialkanoat, und einem Epoxid oder Phosphit, zum Beispiel einem Triphenylphosphit.

In der DE-A-23 34 163 ist ein 2-Komponenten Gemisch, bestehend aus einem Phenol und einem Phosphit beschrieben. Das Stabilisatorgemisch enthält beispielsweise 2,6-dialkyl-substituiertes 4-(Alkylmerkaptomethyl)phenol als phenolische Komponente, und 4-alkyl- oder 2,4-dialkyl-substituiertes Triphenylphosphit.

In der US-A-3 637 585 ist ferner ein 2-Komponenten-Gemisch offenbart, das ein Alkylmercaptomethylphenol enthält, worin der Alkylrest zwei Alkoxycarbonylsubstituenten trägt, sowie ein Dialkylthioalkanoat.

Die alkylthiomethylhaltigen Phenole selbst sind ebenfalls bekannt als Stabilisatoren für Elastomere. So sind beispielsweise 2,4-Bis-(mercaptomethyl)-6-alkylphenole in der EP-A-0 165 209 als besonders wirksame Stabilisatoren beschrieben.

In der EP-A-224 442 werden Zusammensetzungen enthaltend 6-Alkyl-2,4-bis(thiomethyl)phenole als Stabilisatoren beschrieben.

Es besteht jedoch weiterhin ein Bedarf an wirksamen Stabilisatoren für Elastomere, welche gegen oxidativen Abbau empfindlich sind.

Gegenstand vorliegender Erfindung ist daher eine Zusammensetzung enthaltend ein Elastomer und ein Stabilisatorgemisch aus

a) 2,4-Bis-(n-octylthiomethyl)-6-methylphenol
und
b) mindestens einer Verbindung aus der gruppe
Tris(4-nonylphenyl)phosphit,
Tris(2,4-di-t-butylphenyl)phosphit,
3,9-Bis(stearyloxy)-2,4,8,10-tetraoxa-3,9-diphosphaspiro[5,5]undecan,
Terrakis(3-dodecylthio-propionyloxymethyl)methan,
Bis[$\beta$-(n-tridecyloxycarbonyl)ethyl]mercaptan,
3,9-Bis(2,4-di-t-butylphenoxy)-2,4,8,10-tetraoxa-3,9-diphosphaspiro[5,5]undecan,
3,9-Bis(2,4-di-t-butyl-6-methylphenoxy)-2,4,8,10-tetraoxa-3,9-diphosphaspiro[5,5]undecan.

Als Elastomere können die erfindungsgemässen Zusammensetzungen beispielsweise folgende Materialien enthalten:

1. Polydiene, wie beispielsweise Polybutadien, Polyisopren oder Polychloropren; Blockpolymere, wie beispielsweise Styrol/Butadien/Styrol, Styrol/Isopren/Styrol, Acrylnitril/Butadien-Copolymere oder Styrol/Butadien-Copolymere.
2. Copolymere von Mono- und Diolefinen untereinander oder mit anderen Vinylmonomeren, wie z.B. Ethylen-Alkylacrylat-Copolymere, Ethylen-Alkylmethacrylat-Copolymere, Ethylen-Vinylacetat-Copolymere sowie Terpolymere von Ethylen mit Propylen und einem Dien, wie Hexadien, Dicyclopentadien oder Aethylidennorbornen.
3. Halogenhaltige Polymere, wie z.B. Polychloropren, Chlorkautschuk, chloriertes oder chlorsulfoniertes Polyethylen, Epichlorhydrin-Homo- und -Copolymere, Chlortrifluoroethylen-Copolymere, Polymere aus halogenhaltigen Vinylverbindungen, wie z.B. Polyvinylidenchlorid, Polyvinylidenfluorid; sowie deren Copolymere, wie Vinylchlorid-Vinylidenchlorid, Vinylchlorid-Vinylacetat oder Vinylidenchlorid-Vinylacetat.
4. Polyurethane, die sich von Polyethern, Polyestern und Polybutadien mit endständigen Hydroxylgruppen einerseits und aliphatischen oder aromatischen Polyisocyanaten andererseits ableiten sowie deren Vorprodukte.
5. Naturkautschuk.
6. Mischungen (Polyblends) der vorgenannten Polymeren.
7. Wässrige Emulsionen natürlicher oder synthetischer Kautschuke, wie z.B. Naturkautschuk-Latex oder Latices von carboxytierten Styrol/Butadien-Copolymeren.

Gegebenenfalls liegen diese Elastomere als Latices vor und können als solche stabilisiert werden.

Bevorzugt sind Zusammensetzungen, welche als Elastomeres ein Polydien, wie Polybutadien-Kautschuk, ein halogeniertes Polymer, wie Polyvinylidenfluorid, oder ein Polyurethan enthalten. Besonders bevorzugt sind Zusammensetzungen, welche als Elastomeres Polybutadien-Kautschuk enthalten.

Die erfindungsgemässen Zusammensetzungen enthalten zweckmässig 0,01-10 Gew.-% des Stabilisatorgemisches aus a) und b), bezogen auf das Elastomer, insbesondere 0,05-5,0, z.B. 0.05-3, vor allem 0,1-2 Gew.-%. Das Verhältnis der beiden Komponenten a) und b) zueinander kann in weiten Grenzen schwanken. Das Gewichtsverhältnis a):b) ist zweckmässig 9:1 bis 1:9, beispielsweise 2:8 bis 8:2 bzw. 3:7 bis 7:3. Bevorzugte Verhältnisse liegen im Bereich von 2:1 bis 1:2, insbesondere von etwa 1:1 bis 1:2.

Die Einarbeitung in die Elastomeren kann beispielsweise durch Einmischen der Substanzen a) und b) und gegebenenfalls weiterer Additive, wie z.B. Vulkanisationsbeschleuniger, Füllstoffe, Weichmacher oder Pigmente, nach den in der Technik üblichen Methoden, vor oder während der Formgebung, oder auch durch Aufbringen der gelösten oder dispergierten Verbindungen auf das Polymere, gegebenenfalls unter nachträglichem Verdunsten des Lösungsmittels erfolgen. Die Verbindungen a) und b) können auch in Form eines Masterbatches, der diese Verbindungen beispielsweise in einer Konzentration von 2,5 bis 25 Gew.-% enthält, den zu stabilisierenden Kunststoffen zugesetzt werden.

Die Herstellung der Verbindungen a) und b) erfolgt nach an sich bekannten Methoden, wie sie beispielsweise bezüglich a) in der EP-A-0 165 209 und in der US-A-3 227 677 beschrieben sind. Sie können aber auch durch Umsetzung eines Phenols der Formel Ia

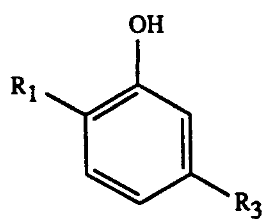

(Ia)

worin $R_1$ = Methyl und $R_3$ = H sind, mit Formaldehyd oder einer unter den Reaktionsbedingungen Formaldehyd freisetzenden Verbindung und mit mindestens einem Merkaptan $R_2$-SH in Gegenwart einer Base gewonnen werden, wobei die Base Mono-, Di- oder Trimethylamin oder Mono- oder Diethylamin ist.

Alle Ausgangsprodukte sind bekannte Verbindungen und können nach bekannten Verfahren hergestellt werden. Sie sind zum Teil auch im Handel erhältlich.

Die nachfolgenden Beispiele erläutern die Erfindung weiter. In den Beispielen genannte Prozente und Teile sind Gewichtsprozente und Gewichtsteile.

HERSTELLUNGSBEISPIELE

Beispiel 1: Herstellung von 2,4-Bis(n-octylthiomethyl)-6-methyl-phenol

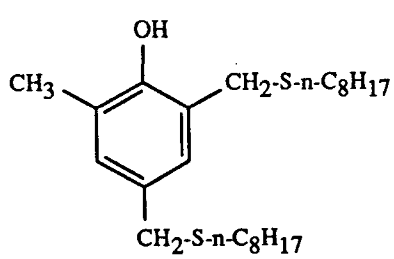

160,74 g (0,72 Mol) 2,4-Bis(dimethylaminomethyl)-6-methylphenol und 210,65 g (1,44 Mol) n-Octanthiol werden in einer Apparatur mit Rührer und Intensivkühler 36 Stunden lang auf 150 °C erhitzt, wobei bei 53,2 bar laufend Dimethylamin abgezogen wird. Man erhält 291,6 g (95 %) eines gelben Oeles. Reines 2,4-Bis-(n-octylthiomethyl)-6-methyl-phenol wird durch Säulenchromatographie des Rohproduktes an Kieselgel als farbloses Oel erhalten.

| Analysewerte: | | | |
|---|---|---|---|
| Berechnet | 70,69 % C<br>10,44 % H<br>15,09 % S | Gefunden | 70,85 % C<br>10,42 % H<br>15,11 % S |

ANWENDUNGSBEISPIELE

Beispiel 2: Stabilisierung von Polybutadien-Kautschuk (Siliconölalterung)

100 g Polybutadien, welches mit 0,4 % 2,6-Di-t.-butyl-p-cresol vorstabilisiert ist, werden auf einem Mischwalzwerk bei 50 °C während 6 Minuten homogen mit 0,15 % der Stabilisatorkomponente a) und 0,3 % der Stabilisatorkomponente b) gemischt. Aus den Walzfellen werden bei 80 °C Platten von 2 mm Dicke gepresst. Eine weitere Platte ohne Stabilisator wird auf dieselbe Weise hergestellt.

Die Prüflinge werden durch Eintauchen in Siliconöl bei 160 °C während 30 Minuten gealtert. Als Kriterium dient der Gelgehalt am Ende der Alterung. Der Gelgehalt wird wie folgt bestimmt:
Die Probe wird nach der Alterung bei Raumtempertur in 100 ml Toluol gelöst. Nach 24 Stunden wird die Lösung durch ein Drahtsieb filtriert (nach ASTM E 11 No. 400), der Rückstand sorgfältig gewaschen und getrocknet. Der Gelgehalt ergibt sich aus

$$Gel = \frac{Fg - Fo}{E} \times 100\,(\%)$$

Fg = Gewicht des Filters mit Gel
Fo = Gewicht des leeren Filters
E = Einwaage der Probe
Die Resultate sind in der nachfolgenden Tabelle 1 zusammengefasst.

Tabelle 1

| Stabilisator | Struktur | Gelgehalt (%) |
|---|---|---|
| Keiner | — | 10,2 |
| A | 2,4-Bis(n-octylthiomethyl)-6-methylphenol | 2,4 |
| B | A + Tris(4-nonylphenyl)-phosphit | 1,0 |
| C | A + Tris(2,4-di-t.butylphenyl)-phosphit | 0,8 |
| D | A + 3,9-Bis(stearyloxy)-2,4,8,10-tetraoxa-3,9-diphosphaspiro[5,5]undecan | 1,1 |
| E | A + Tetrakis(3-dodecylthio-propionyl-oxymethyl)-methan | 0,4 |
| F | A + Bis[β-(n-tridecyloxycarbonyl)ethyl]-mercaptan | 1,2 |

Wird im obigen Herstellungsbeispiel der Stabilisator A durch 2,4-Bis(n-octylthiomethyl)-6-t-butylphenol aus Beispiel 2 ersetzt, kommt man mit den analogen Stabilisatorkombinationen zu ähnlich guten Stabilisierungswerten.

Beispiel 3: Stabilisierung von Polybutadienkautschuk (Siliconölalterung)

Die Durchführung des Versuchs erfolgt analog zu der in Beispiel 3 beschriebenen Weise, jedoch erfolgt die Alterung in Siliconöl bei 160 °C während 45 Minuten. Die Ergebnisse sind in der nachfolgenden Tabelle 2 aufgelistet.

Tabelle 2

| Stabilisator | Struktur | Gelgehalt |
|---|---|---|
| Keiner | — | 22.05 |
| A | 2,4-Bis(n-octylthiomethyl)-6-methylphenol | 3.75 |
| C | A + Tris(2,4-di-t.butylphenyl)-phosphit | 2.30 |
| G | A + 3,9-Bis(2,4-di-t.butylphenoxy)-2,4,8,10-tetraoxa-3,9-diphosphaspiro[5,5]undecan | 2.55 |
| H | A + 3,9-Bis(2,4-di-t.butyl-6-methylphenoxy-2,4,8,10-tetraoxa--3,9-diphosphaspiro[5,5]undecan | 1.98 |

## Patentansprüche

1. Zusammensetzungen enthaltend ein Elastomer und ein Stabilisatorgemisch aus
    a) 2,4-Bis(n-octylthiomethyl)-6-methylphenol und
    b) mindestens einer Verbindung aus der Gruppe
    Tris(4-nonylphenyl)phosphit,
    Tris(2,4-di-t-butylphenyl)phosphit,
    3,9-Bis(stearyloxy)-2,4,8,10-tetraoxa-3,9-diphosphaspiro[5,5]undecan,
    Tetrakis(3-dodecylthio-propionyloxymethyl)methan,
    Bis[$\beta$-(n-tridecyloxycarbonyl)ethyl]mercaptan,
    3,9-Bis(2,4-di-t-butylphenoxy)-2,4,8,10-tetraoxa-3,9-diphosphaspiro[5,5]undecan,
    3,9-Bis(2,4-di-t-butyl-6-methylphenoxy)-2,4,8,10-tetraoxa-3,9-diphosphaspiro[5,5]undecan.

2. Zusammensetzungen gemäss Anspruch 1, worin das Elastomer ein Polydien, ein halogenhaltiges Polymer oder ein Polyurethan ist.

3. Zusammensetzungen gemäss Anspruch 1, worin das Elastomer Polybutadien-Kautschuk ist.

4. Zusammensetzungen gemäss Anspruch 1, enthaltend 0,05-5,0 Gew.-% des Stabilisatorgemisches aus a) und b).

5. Verwendung eines Gemisches aus den im Anspruch 1 definierten Komponenten a) und b) als Stabilisatorgemisch in Elastomeren.

## Claims

1. A composition containing an elastomer and a stabilizer mixture of
    a) 2,4-bis(n-octylthiomethyl)-6-methylphenol and
    b) at least one compound from the group consisting of
    tris(4-nonylphenyl)phosphite,
    tris(2,4-di-t-butylphenyl)phosphite,

3,9-bis(stearyloxy)-2,4,8,10-tetraoxa-3,9-diphosphaspiro[5.5]undecane,
tetrakis(3-dodecylthio-propionyloxymethyl)methane,
bis[β-(n-tridecyloxycarbonyl)ethyl]mercaptan,
3,9-bis(2,4-di-t-butylphenoxy)-2,4,8,10-tetraoxa-3,9-diphosphaspiro[5.5]undecane,
3,9-bis(2,4-di-t-butyl-6-methylphenoxy)-2,4,8,10-tetraoxa-3,9-diphosphaspiro[5.5]undecane.

**2.** A composition according to claim 1, in which the elastomer is a polydiene, a halogen-containing polymer or a polyurethane.

**3.** A composition according to claim 1, in which the elastomer is polybutadiene rubber.

**4.** A composition according to claim 1, containing 0.05-5.0 % by weight of the stabilizer mixture of a) and b).

**5.** The use of a mixture of the components a) and b) defined in claim 1 as a stabilizer mixture in elastomers.

**Revendications**

**1.** Compositions contenant un élastomère et un mélange de stabilisants formé
a) de 2,4-bis(n-octylthiométhyl)-6-méthylphénol et
b) d'au moins un composé du groupe des
tris(4-nonylphényl)phosphite,
tris(2,4-di-t-butylphényl)phosphite,
3,9-bis(stéaryloxy)-2,4,8,10-tétraoxa-3,9-diphosphaspiro[5,5]undécane,
tétrakis(3-dodécylthio-propionyloxyméthyl)méthane,
bis[β-(n-tridécyloxycarbonyl)éthyl]mercaptan,
3,9-bis(2,4-di-t-butylphénoxy)-2,4,8,10-tétraoxa-3,9-diphosphaspiro[5,5]undécane,
3,9-bis(2,4-di-t-butyl-6-méthylphénoxy)-2,4,8,10-tétraoxa-3,9-diphosphaspiro[5,5]undécane.

**2.** Compositions selon la revendication 1, dans lesquelles l'élastomère est un polydiène, un polymère halogéné ou un polyuréthanne.

**3.** Compositions selon la revendication 1, dans lesquelles l'élastomère est le polydiène-caoutchouc.

**4.** Compositions selon la revendication 1, contenant de 0,05 à 5,0 % en poids du mélange de stabilisant de a) et b).

**5.** Utilisation d'un mélange des composants a) et b) défini dans la revendication 1 en tant que mélange de stabilisants d'élastomères.